(19) Europäisches Patentamt
European Patent Office
Office européen des brevets

(11) Veröffentlichungsnummer: **0 414 174 A2**

(12) **EUROPÄISCHE PATENTANMELDUNG**

(21) Anmeldenummer: **90115868.3**

(51) Int. Cl.[5]: **C08G 59/42**, C08G 59/62

(22) Anmeldetag: **18.08.90**

(30) Priorität: **22.08.89 DE 3927638**

(43) Veröffentlichungstag der Anmeldung:
**27.02.91 Patentblatt 91/09**

(84) Benannte Vertragsstaaten:
**BE DE FR GB IT NL**

(71) Anmelder: **HOECHST AKTIENGESELLSCHAFT**
**Postfach 80 03 20**
**D-6230 Frankfurt am Main 80(DE)**

(72) Erfinder: **Kupfer, Rainer, Dr.**
**Römerstrasse 2**
**D-8261 Kastl(DE)**
Erfinder: **Hille, Martin, Dr.**
**In den Eichen 46**
**D-6237 Liederbach(DE)**
Erfinder: **Böhm, Roland**
**Fischbacher Strasse 29**
**D-6233 Kelkheim/Taunus(DE)**
Erfinder: **Staiss, Friedrich**
**Odenwaldstrasse 21**
**D-6200 Wiesbaden(DE)**

(54) **Aminfreie veresterte Glycidylether-Additionsprodukte und deren Verwendung.**

(57) Die neuen Glycidylether-Additionsprodukte werden erhalten durch Veresterung von einer Diolverbindung, ausgewählt aus der Gruppe der linearen Oxalkylate und anderer aminfreier aliphatischer Diole, und einer Additionsverbindung aus Polyether-Blockpolymeren und Glycidylethern mit Dicarbonsäuren. Sie werden vorteilhaft zum Spalten von Erdölemulsionen eingesetzt.

EP 0 414 174 A2

## AMINFREIE VERESTERTE GLYCIDYLETHER-ADDITIONSPRODUKTE UND DEREN VERWENDUNG

Die Erfindung betrifft aminfreie veresterte Glycidylether-Additionsprodukte und die Verwendung dieser Produkte.

Bei der Förderung von Erdöl tritt eine zunehmende Verwässerung des Öls ein. Das mitgeförderte Wasser bildet mit dem Öl eine Wasser-in-Öl-Emulsion. In dem emulgierten Wasser können Salze, wie Natriumchlorid, Calciumchlorid und Magnesiumchlorid, gelöst sein. Dieses Emulsionswasser muß vor dem Transport abgetrennt werden. In den Raffinerien wird vor der Destillation der Salzgehalt durch ein erneute Emulsionsbildung mit Süßwasser und Demulgierung weiter abgesenkt. Ein zu hoher Salzgehalt im Rohöl kann zu Störungen und Korrosion in den Raffinerien führen. Ein Erdölspalter, auch Demulgator oder Emulsionsspalter genannt, hat die Aufgabe, bei möglichst geringer Anwendungskonzentration die Emulsion zu brechen und bei diesem Separationsprozeß möglichst ohne oder mit minimaler zusätzlicher Aufwendung von Wärme eine vollständige Wasserabscheidung zu bewirken und den Salzgehalt auf ein Minimum zu reduzieren. Die Qualitätskriterien für geliefertes Rohöl sind das Restsalz und der Wassergehalt. Die Rohöle sind je nach ihrer Provenienz unterschiedlich zusammengesetzt. Die natürlichen Emulsionsstabilisatoren besitzen einen komplizierten, differenzierten chemischen Aufbau. Zur Überwindung ihrer Wirkung müssen selektive Spalter entwickelt werden. Durch verschiedene Förder- und Aufbereitungsbedingungen werden die Anforderungen, die an einen Erdölspalter gestellt werden, noch vielfältiger. Durch das ständige Erschließen neuer Erdölfelder und die Änderung der Förderbedingungen älterer Erdölfelder bleibt die Entwicklung optimaler Demulgatoren ein akutes Problem, und es werden eine große Anzahl verschiedenartig aufgebauter Demulgatoren oder Demulgatormischungen benötigt.

Aus der CA-Patentschrift 1 153 356 sind Glycidylether-Additionsprodukte als Verdickungsmittel für Hydraulikflüssigkeiten auf Glykol-Wasser-Basis bekannt. Im einzelnen handelt es sich unter anderem um Additionsprodukte aus Ethylenoxid/Propylenoxid-Blockpolymeren und Diglycidylethern von Bisphenolen oder Polyglycidylethern von Phenol/Formaldehyd-Kondensationsprodukten (Novolak-Harzen). In den beiden US-Patentschriften 4 419 265 und 4 420 413 sind Additionsprodukte aus Ethylenoxid/Propylenoxid-Blockpolymeren und Glycidylethern als Erdölspalter beschrieben. Die Erdölspalter der US-Patentschrift 4 419 265 werden dadurch erhalten, daß ein Ethylenoxid/Propylenoxid-Blockpolymeres an einem Diglycidylether von Bisphenolen angelagert wird und jene der US-Patentschrift 4 420 413 dadurch, daß an dem genannten Anlagerungsschritt noch eine Oxalkylierung mit Ethylenoxid, Propylenoxid und/oder Butylenoxid angeschlossen wird.

In der US-Patentschrift 4 734 523 sind Veresterungsprodukte aus oxalkylierten primären Fettaminen, Ethylenoxid/Propylenoxid-Blockpolymeren und Dicarbonsäuren als Erdölspalter beschrieben, und gemäß US-Patentschrift 4 730 079 erhalt man weitere Erdölspalter durch Quaternisierung der genannten Veresterungsprodukte.

Schließlich seien noch die veresterten Glycidylether-Additionsprodukte gemäß Offenlegungsschrift DE 38 09 065-Al erwähnt. Sie werden durch Veresterung von einem oxalkylierten primären Fettamin und einem Additionsprodukt aus Polyether-Blockpolymeren und Glycidylethern mit einer Dicarbonsäure erhalten und sollen Erdölspalter mit hoher Demulgierwirkung darstellen.

Es hat sich herausgestellt, daß all die erwähnten Erdölspalter noch zu wünschen übrig lassen.

Mit der vorliegenden Erfindung werden neue Erdölspalter zur Verfügung gestellt, die Veresterungsprodukte aus einer Diolverbindung, ausgewählt aus der Gruppe der linearen Oxalkylate und anderer bestimmter aliphatischer Diole (1), einer Additionsverbindung aus Ethylenoxid/Propylenoxid-Blockpolymeren und Glycidylethern (2) und einer Dicarbonsäure (3) darstellen. Die neuen veresterten Glycidylether-Additionsprodukte unterscheiden sich von den in der genannten Offenlegungsschrift DE 38 09 065-A1 vorgeschlagenen und am nachsten stehenden dadurch, daß die Komponente (1) nicht ein Diol in Form eines oxalkylierten primären Fettamins ist, sondern eine aminfreie (stickstofffreie) Diolverbindung. Es ist überraschend, daß durch diesen Austausch weitere Erdölspalter mit hoher Wirksamkeit erhalten werden. Der Grund dafür dürfte in der speziellen Struktur der Reaktionsprodukte liegen, die aus der erfindungsgemäßen Kombination der genannten Komponenten (1) bis (3) resultiert.

Die erfindungsgemäßen Additionsprodukte sind demnach dadurch gekennzeichnet, daß sie erhalten werden durch Veresterung von

(1) einer Diolverbindung der nachstehenden Formel Ia

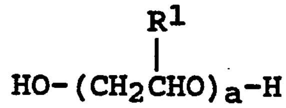

worin a eine Zahl von 1 bis 60 ist und $R^1$ H oder $CH_3$ ist und innerhalb der Kette des Polyoxalkylenrestes, in Blöcken oder statistisch angeordnet, auch beide Bedeutungen annehmen kann,
oder der nachstehenden Formel Ib
$HO-R^2-OH$
worin $R^2$ ein acyclischer (gerader oder verzweigter, gesättigter oder ungesättigter) zweiwertiger Kohlenwasserstoffrest ist, und
(2) einem Additionsprodukt aus 1 mol OH-Funktion eines Polyether-Blockpolymeren der nachstehenden Formel II

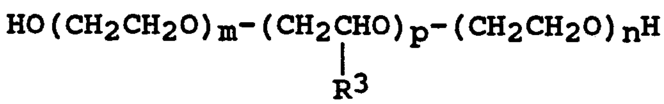

worin $R^3$ Methyl oder Ethyl bedeutet, n und m Zahlen sind, die so gewahlt sind, daß der Polyethylenoxidanteil 10 bis 80 % des Molekulargewichts des Gesamtmoleküls beträgt, und p eine Zahl von 10 bis 100 ist,
und 0,3 bis 1 mol Epoxid-Funktion eines Glycidylethers der nachstehenden Formel III

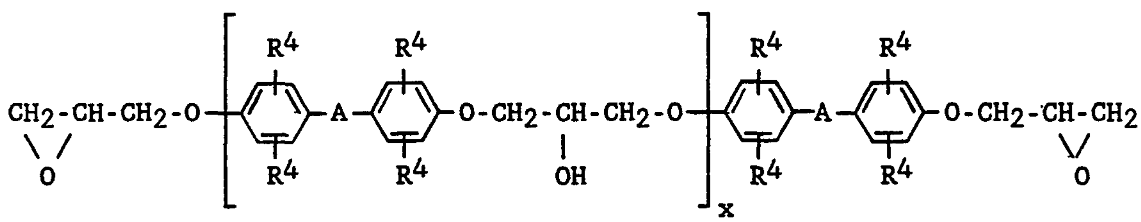

worin $R^4$ gleich oder verschieden sein kann und Wasserstoff, $C_1$ bis $C_4$-Alkyl oder Halogen, A eine direkte Bindung, eine Sulfonyl- oder Cyclohexylgruppe oder eine Gruppe der Formel
$R^5$- C -$R^6$

$R^5$ und $R^6$ = Wasserstoff, Methyl oder Phenyl, und x eine Zahl von 0 bis 10 bedeutet,
oder 0,1 bis 1,5 mol Epoxid-Funktion eines Glycidylethers der nachstehenden Formel IV

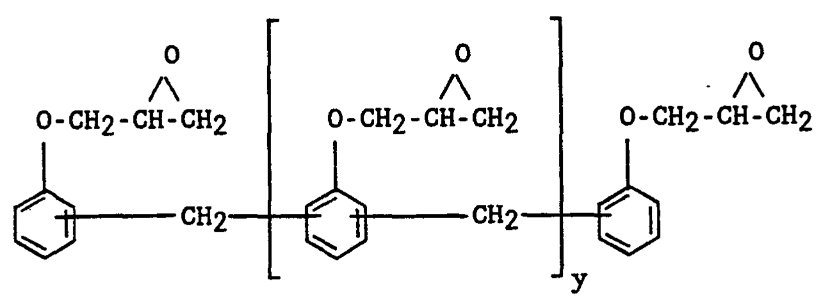

worin y eine Zahl von 1 bis 10 ist, mit (3) einer Dicarbonsäure, wobei die Reaktionskomponenten (1), (2) und (3) im Äquivalentverhaltnis von 1 : (0,1 bis 1,5) : (0,5 bis 2) eingesetzt werden.

Als Diolverbindungen der Formel Ia sind jene mit a = 2 bis 40 bevorzugt (es versteht sich von selbst, daß es sich bei a um ganze oder gebrochene Zahlen handeln kann). Zu den Bedeutungen von $R^1$ in Formel Ia sei noch folgendes hinzugefügt: $R^1$ ist H, wobei die Polyoxalkylenreste Polyoxethylen sind, oder $R^1$ ist $CH_3$, wobei die Polyoxalkylenreste Polyoxpropylen sind, oder $R^1$ ist sowohl H als auch $CH_3$, wobei die Polyoxalkylenreste Polyoxethylen und Polyoxpropylen sind, die blockweise oder statistisch vorliegen. Beispiele für Diole der Formel Ia sind Diethylenglykol ($R^1$ = H, a = 2), Polyethylenglykol der Molmasse

400 ($R^1$ = H, a = etwa 8 als Mittelwert), Polypropylenglykol der Molmasse 3 000 ($R^1$ = $CH_3$, a = etwa 56 als Mittelwert) und Ethylenoxid/Propylenoxid-Blockpolymere mit einem Propylenoxidblock aus 30 Propylenoxideinheiten und zwei Ethylenoxidblocken aus jeweils 5 Ethylenoxideinheiten ($R^1$ = H und $CH_3$, a = etwa 40 als Mittelwert).

Als Diolverbindungen der Formel Ib sind solche bevorzugt, wenn $R^2$ ein (gerader oder verzweigter) Alkylenrest oder Alkenylenrest ist. Der Alkylenrest enthält vorzugsweise 2 bis 18 Kohlenstoffatome. Beispiele für derartige Diole sind Ethylenglykol, Propylenglykol, Butandiol, Hexandiol, Octandiol, Dodecandiol, Octadecandiol, 2,2-Dimethyl-propan-1,3-diol (Neopentylglykol); 2-Ethylhexandiol-1,3; 2,2,4-Trimethylpentandiol-1,3 und 2-Methyl-2-sec.-butyl-propan-1,3-diol. Im Falle des genannten Alkenylenrestes, der eine oder mehrere Doppelbindungen enthalten kann, kommen neben niedermolekularen (nicht polymeren) auch höhermolekulare (polymere) Verbindungen in Betracht. Als Beispiele für die niedermolekularen Diole seien Verbindungen wie Buten-2-diol-1,4 genannt und für die polymeren Diole, die Hydroxylendverschlossenen Polybutadiene. Diese Polybutadiendiole entsprechen der Formel $HO-(C_4H_6)_b-OH$, worin b eine Zahl von 20 bis 70 ist, vorzugsweise 40 bis 60. Sie stellen eine Flüssigkeit von nur geringer Viskosität dar und sind im Handel unter dem Namen Liquiflex-H erhältlich (bei diesem Produkt handelt es sich in der Regel um eine Mischung aus etwa 60 Gew.-% Trans-1,4-ungesättigt, etwa 20 Gew.-% Cis-1,4-ungesättigt und etwa 20 Gew.-% Vinyl-1,2-ungesättigt).

Als Polyether-Blockpolymerisate der Formel II sind solche bevorzugt, wenn $R^3$ $CH_3$ ist, n und m Zahlen sind, die so gewählt sind, daß der Polyethylenoxidanteil 15 bis 70 % des Molekulargewichtes des Gesamtmoleküls beträgt, und p eine Zahl von 20 bis 70 ist.

Bevorzugte Glycidylether der Formel III, das sind Diglycidylether von Bisphenolen, sind solche, wenn $R^4$ jeweils gleich ist und Wasserstoff bedeutet, A eine Gruppe der Formel

$$R^5-\overset{|}{\underset{|}{C}}-R^6$$

ist, worin $R^5$ und $R^6$ gleich sind und H oder $CH_3$ bedeuten, und x eine Zahl von 0 bis 5 ist.

Bevorzugte Glycidylether der Formel IV, das sind Polyglycidylether von Phenol/Formaldehyd-Kondensationsprodukten, sind solche, wenn y eine Zahl von 2 bis 5 ist (die $-CH_2$-Brücken in der Formel IV stehen bekanntlich im wesentlichen in ortho- und para-Position am Phenylkern).

Die Bereitung der Reaktionskomponente (2) erfolgt durch Addition eines Polyether-Blockpolymeren der Formel II an einem Glycidylether der Formel III im Äquivalentverhaltnis von 1 : 0,3 bis 1, vorzugsweise 1 : 0,5 bis 0,9, oder an einem Glycidylether der Formel IV im Äquivalentverhaltnis von 1 : 0,1 bis 1,5, vorzugsweise 1 : 0,3 bis 1.

Es hat sich herausgestellt, daß Erdölspalter mit besonders guter Wirkung dann erhalten werden, wenn die Reaktionskomponente (2) propoxyliert ist, wenn also das genannte Additionsprodukt aus einem Polyether-Blockpolymeren der Formel II und einem Glycidylether der Formel III oder der Formel IV mit 5 bis 700 g Propylenoxid, vorzugsweise 30 bis 300 g Propylenoxid, pro 100 g Additionsprodukt, propoxyliert worden ist.

Die Polyether-Blockpolymeren der Formel II und die Glycidylether der Formeln III und IV sowie die Umsetzungen dieser Komponenten zu den in Rede stehenden Additionsprodukten, welche die Reaktionskomponente (2) der vorliegenden Erfindung darstellen, sind in den eingangs genannten Druckschriften derart ausführlich beschrieben, daß es sich erübrigt, hier darauf noch naher einzugehen. Sie sind außerdem im Handel erhältlich.

Die einzusetzende Dicarbonsäure, das ist die Reaktionskomponente (3), kann aromatischer oder aliphatischer Art sein. Die aromatische Dicarbonsäure ist vorzugsweise die Phthalsäure. Die aliphatischen Dicarbonsäuren können gesättigt oder ungesättigt sein, wie die Fumarsäure und die Maleinsäure. In Betracht kommen sowohl die üblichen Dicarbonsäuren der Formel $HOOC-(CH_2)_z-COOH$, worin z eine Zahl von vorzugsweise 1 bis 8 ist und wobei eine oder mehrere $CH_2$-Gruppen mit OH, $C_1$ bis $C_{18}$-Alkyl oder mit $C_3$ bis $C_{18}$-Alkenyl substituiert sein können, als auch jene in Form der dimerisierten Fettsäuren entsprechend der Formel HOOC-R-COOH, worin R das Alkylgerüst einer dimerisierten Fettsäure mit vorzugsweise 22 bis 42 C-Atomen, insbesondere 34 C-Atomen, ist. Bevorzugte dimerisierte Fettsäuren sind jene, die unter der Bezeichnung Pripol im Handel erhältlich sind. Diese dimerisierten Fettsäuren enthalten bekanntlich im wesentlichen lineare und cyclische Verbindungen sowie Anteile von trimeren und höher kondensierten Fettsäuren. Vertreter der genannten üblichen Dicarbonsäuren sind Bernstein-, Adipin-, Pimelin- und Sebacinsäure sowie Dodecyl- oder Dodecenylbernsteinsäure, Äpfelsäure und Weinsäure. Die als Reaktionskomponente (3) bevorzugten Dicarbonsäuren sind demnach

a) jene der Formel $HOOC-(CH_2)_z-COOH$, worin z eine Zahl von 1 bis 8 ist,

b) die $C_1$ bis $C_{18}$-Alkyl- oder $C_3$ bis $C_{18}$-Alkenyl-substituierten Dicarbonsäuren der genannten Formel, wie die Dodecyl- oder Dodecenylbernsteinsäure,

c) die dimerisierten Fettsäuren der Formel HOOC-R-COOH, worin R das Alkylgerüst einer dimerisierten Fettsäure mit 22 bis 42 C-Atomen ist, insbesondere mit 34 C-Atomen,

d) die Fumar- und Maleinsäure und

e) die Phthalsäure. Es versteht sich von selbst, daß anstelle einer Dicarbonsäure auch Dicarbonsäureanhydride, Dicarbonsäurehalogenide oder Dicarbonsäureester eingesetzt werden können, da auch mit diesen Dicarbonsäurederivaten die erfindungsgemaße Veresterungsreaktion ablauft.

Das charakteristische Merkmal der Veresterung der beschriebenen Reaktionskomponenten (1), (2) und (3) zur Herstellung der erfindungsgemäßen Erdölspalter ist das Äquivalentverhaltnis, in dem die drei Komponenten eingesetzt werden; es beträgt 1 : (0,1 bis 1,5) : (0,5 bis 2), vorzugsweise 1 : (0,3 bis 1) : (0,7 bis 1,5). Die unter Polykondensation verlaufende Veresterung kann unter Verwendung eines höhersiedenden inerten Lösungsmittels, wie Toluol, Xylol und technische Aromatenschnitte, oder ohne Lösungsmittel in der Schmelze und unter Abdeckung mit einem Schutzgas durchgeführt werden, wobei die Durchführung in Lösemitteln bevorzugt ist. Bei Veresterung mit einem Lösungsmittel wählt man als Reaktionstemperatur zweckmäßigerweise die Rückflußtemperatur des Reaktionsgemisches und entfernt das gebildete Reaktionswasser durch azeotrope Destillation. Bei Veresterung in Substanz wird das Reaktionswasser direkt aus der Reaktionsmischung ausgetragen. Die Reaktionstemperatur liegt bei 100 bis 220 °C, vorzugsweise 160 bis 200 °C. Zur Beschleunigung der Reaktion verwendet man, wie es bei Veresterungsreaktionen zweckmäßig ist, einen alkalischen oder säuren Katalysator, wobei die säure Katalyse bevorzugt ist. Der Verlauf und das Ende der Reaktion kann mit Hilfe des entstehenden Reaktionswassers oder durch die Bestimmung der Säurezahl kontrolliert werden.

Nachstehend wird ein bevorzugtes Verfahren zur Herstellung der neuen Erdölspalter naher beschrieben.

Die difunktionelle Alkoholkomponente (1), die Additionsverbindung aus Polyether-Blockpolymerisaten und Glycidylethern (2) und die Dicarbonsäure (3) sowie saurer Katalysator werden in einem Reaktionsgefäß vorgelegt. Geeignete saure Katalysatoren sind Halogenwasserstoffsäuren, Phosphorsäuren, Schwefelsäure, Sulfonsäuren und Halogenessigsäuren. Bevorzugt sind Salzsäure, Phosphorsäuren und Sulfonsäuren. Die Menge an Säure als Katalysator beträgt im allgemeinen 0,05 bis 5 Gew.-%, vorzugsweise 0,1 bis 1 Gew.-%, bezogen auf die Gewichtssumme aus den vorgelegten drei Reaktionskomponenten. Ein besonders vorteilhafter Katalysator für die erfindungsgemaße Veresterungsreaktion ist eine Mischung aus einer der genannten Säuren und einem Alkyltitanat oder Alkylpolytitanat. Bevorzugt sind Alkyltitanate der Formel $Ti(OR')_4$, worin R′ ein Alkylrest mit 1 bis 18 C-Atomen ist, vorzugsweise mit 1 bis 6 C-Atomen, Alkylpolytitanate der Formel $R'O\text{-}[Ti(OR')_2O]q\text{-}R'$, worin R′ die genannte Bedeutung hat und g eine Zahl von 1 bis 10 ist, vorzugsweise von 4 bis 7, und Diisopropyl-diethanolamin-titanat. Die Menge an Titanat liegt in der Regel bei 0,05 bis 2 Gew.-%, vorzugsweise 0,1 bis 1 Gew.-%, Gewichtsprozente bezogen auf die Gewichtssumme der drei Reaktionskomponenten. In einer solchen Menge wird auch die Säure eingesetzt, wenn als Katalysator die in Rede stehende Kombination aus Säure und Titanat verwendet wird.

Die im Reaktionsgefäß vorgelegte Mischung aus den drei Reaktionskomponenten, dem Lösungsmittel und dem Veresterungskatalysator wird unter Rühren und Durchleiten eines inerten Gases auf 100 bis 220 °C, vorzugsweise 160 bis 200 °C, erhitzt und bei dieser Temperatur unter kontinuierlicher Austragung des entstehenden Wassers gehalten (azeotrope Destillation), bis die Umsetzung beendet ist. Das erhaltene Veresterungsprodukt kann durch Waschen mit Wasser vom eingesetzten Katalysator gereinigt werden. Die Reaktionszeit liegt im Bereich von 5 bis 20 Stunden. Die erfindungsgemäßen stickstofffreien Veresterungsprodukte stellen gelb bis braun gefärbte Flüssigkeiten dar. Sie weisen eine spezifische chemische Charakteristik und eine spezielle Struktur auf und besitzen eine Viskosität von 500 bis 60 000 mPa • s, vorzugsweise 1 000 bis 40 000 mPa • s. Da ihre Herstellung bevorzugt in Gegenwart von Lösungsmitteln durchgeführt wird, liegen sie in der Regel in Form einer konzentrierten Lösung vor (Wirkstoffgehalt vorzugsweise bei 60 bis 80 Gew.-%).

Die erfindungsgemäßen Additionsprodukte zeichnen sich durch eine hohe Demulgierwirkung aus. Bei den üblichen Erdölaufbereitungstemperaturen wird schon nach kurzer Separationszeit eine vollstandige Wasserabscheidung und Reduzierung des Salzgehaltes erreicht. Mit den neuen Erdölspaltern werden also bei den üblichen Aufbereitungstemperaturen nach kurzer Separationszeit abnahmespezifische Roherdöle erhalten. Sie bewirken darüberhinaus, daß das abgetrennte Wasser praktisch frei von Öl ist, daß also auch eine vollständige Ölabscheidung aus dem abgetrennten Wasser und damit eine gute Wasserquälitat erreicht wird. Mit den neuen Erdölspaltern wird ferner eine scharfe Trennung zwischen der Öl- und Wasserphase erreicht, was einen weiteren großen Vorteil darstellt. All diese Vorteile werden in besonderem Ausmaß im Falle von paraffinischen Erdölen erhalten. Die Einsatzmenge an erfindungsgemäßem Demulgator kann in weiten Grenzen variieren. Sie hängt insbesondere von der Art des Erdöls und der Aufbereitungstemperatur ab. Die wirksame Menge beträgt im allgemeinen 5 bis 100 g pro Tonne, vorzugsweise 10 bis 50 g pro Tonne. Die neuen Spalter werden zum Zwecke der besseren Dosierung und Verteilbarkeit vorzugsweise in Lösung eingesetzt. Als Lösemittel sind Wasser oder organische Flüssigkeiten geeignet, beispielsweise Alkohole, wie Methanol, Isopropanol oder Butanol, aromatische Kohlenwasserstoffe, wie Toluol oder Xylol, und handelsübliche Mischungen aus höheren Aromaten.

Die Erfindung wird nun an Beispielen noch näher erläutert.

Nachstehend werden zunachst die Additionsprodukte aus einem Polyether-Blockpolymeren der Formel II und einem Glycidylether der Formel III oder IV beschrieben, die in den Beispielen verwendet wurden; es sind dies die Additionsprodukte (2a) bis (2e).

- Das Additionsprodukt (2a) ist erhalten worden durch Addition von 1 mol Hydroxyl-Funktion eines Polyether-Blockpolymeren der Formel II mit $R^3 = CH_3$, m + n = 22, p = 29 und mit 36,3 % Polyethylenoxid-Anteil, bezogen auf das Molekulargewicht des Gesamtmoleküls, das 2 668 ist, und 0,8 mol Epoxid-Funktion eines Glycidylethers der Formel III mit $R^4$ = H, A = $C(CH_3)_2$, x = 0,2 und Äquivalentgewicht des Gesamtmoleküls = 192. Das Äquivalentgewicht des Additionsproduktes ist 1 275.
- Das Additionsprodukt (2b) ist erhalten worden durch Addition von 1 mol Hydroxyl-Funktion des oben angegebenen Polyether-Blockpolymeren und 0,9 mol Epoxid-Funktion eines Glycidylethers der Formel IV mit y = 3,3 und Äquivalentgewicht des Gesamtmoleküls = 180. Das Äquivalentgewicht des Additionsproduktes ist 976.
- Das Additionsprodukt (2c) ist das Additionsprodukt (2a), propoxyliert mit 50 g Propylenoxid pro 100 g Additionsprodukt. Das Äquivalentgewicht ist 1 870.
- Das Additionsprodukt (2d) ist das Additionsprodukt (2a), propoxyliert mit 100 g Propylenoxid pro 100 g Additionsprodukt. Das Äquivalentgewicht ist 2 192.
- Das Additionsprodukt (2e) ist das Additionsprodukt (2b), propoxyliert mit 250 g Propylenoxid pro 100 g Additionsprodukt. Das Äquivalentgewicht ist 1 600.

Obwohl die Addition der in Rede stehenden Polyether-Blockpolymeren und Glycidylether und die Propoxylierung des Additionsproduktes wohlbekannt sind, sei hier zur Addition noch folgendes gesagt: Sie erfolgte im einzelnen in der Weise, daß zunachst das Polyether-Blockpolymere mit einer wäßrigen Lösung von einem alkalischen Katalysator (beispielsweise mit einer etwa 30gew.%igen wäßrigen Kaliumhydroxid-Lösung) auf einen Katalysatorgehalt von 0,05 bis 3 Gew.-%, vorzugsweise 0,1 bis 1 Gew.-%, eingestellt und die Mischung anschließend mit dem Glycidylether bei einer Temperatur von 70 bis 150 °C, vorzugsweise 80 bis 120 °C, umgesetzt wurde.

Beispiel 1

In einem Reaktionsgefäß, das mit Rührer, Wasserabscheider, Rückflußkühler und Thermometer ausgestattet ist, werden vorgelegt 396 g, das entspricht 2,0 mol Hydroxyl-Funktion, von einem Polyethylenglykol der Formel Ia, wobei $R^1$ = H und a = 8,6 ist (Reaktionskomponente 1), 2 192 g, das sind 1,0 mol Hydroxyl-Funktion, von dem Additionsprodukt (2d) (Reaktionskomponente 2) und 516 g, das sind 1,8 mol Carboxyl-Funktion, von einer dimerisierten Fettsäure mit einem Alkylgerüst mit 34 C-Atomen (Reaktionskomponente 3). Die drei Reaktionskomponenten werden also im Äquivalentverhältnis 1 : 0,5 : 0,9 eingesetzt. Als Lösungsmittel werden 776 g (das entspricht 25 Gew.-%, bezogen auf die Gewichtssumme aus den drei Reaktionskomponenten) eines technischen Aromatenschnittes mit einem Siedebereich von 186 bis 216 °C zugegeben. Als Veresterungskatalysator fungiert ein Gemisch von 15,5 g Dodecylbenzolsulfonsäure (das sind 0,5 Gew.-%, bezogen auf die Gewichtssumme der drei Reaktionskomponenten) und 6,2 g Diisopropyl-di-triethanolaminotitant (das sind 0,2 Gew.-%, bezogen auf die Gewichtssumme der drei Edukte). Die Mischung wird innerhalb von 2 Stunden unter Rühren auf 195 °C aufgeheizt, wobei die Reaktionskomponentren unter Veresterung reagieren und das Reaktionswasser azeotrop abdestilliert wird. Die Temperatur von 195 °C wird für weitere 5 Stunden beibehalten. Der Verlauf und das Ende der Veresterungsreaktion wird durch Bestimmung der Säurezahl verfolgt. Das bei einem Umsetzungsgrad von 98,3 % erhaltene Produkt ist eine gelbe Flüssigkeit mit einem Wirkstoffgehalt von 85,0 % und einer Viskosität von 1,8 Pa • s.

Beispiel 2

Reaktionskomponenten:

(1) Polypropylenglykol der Formel Ia, wobei $R^1 = CH_3$ und a = 56 ist (Äquivalentgewicht = 1 622 g/mol OH)

(2) Additionsprodukt (2a)
(3) Maleinsäureanhydrid Äquivalentverhältnis von (1) : (2) : (3) = 1 : 1,5 : 2
Durchführung wie in Beispiel 1, mit dem Unterschied, daß das Lösungsmittel in einer Menge von 67 Gew.-%, bezogen auf die Gewichtssumme aus den drei Reaktionskomponenten, eingesetzt wird.
Umsetzungsgrad 94,9 %, Viskosität 3,6 Pa • s,
Wirkstoffgehalt 58,1 %.

Beispiel 3

Reaktionskomponenten:

(1) Ethylenoxid/Propylenoxid-Blockpolymeres der Formel Ia mit einem zentralen Propylenoxid-Block ($R^1$ = $CH_3$) aus 30 Propylenoxideinheiten und jeweils einem daran anschließenden Ethylenoxidblock ($R^1$ = H) aus jeweils 5 Ethylenoxideinheiten (Äquivalentgewicht = 1 129 g/mol OH)
(2) Additionsprodukt (2c)
(3) Phthalsäureanhydrid
Äquivalentverhaltnis von (1) : (2) : (3) = 1 : 0,1 : 0,5
Durchführung wie in Beispiel 1.
Umsetzungsgrad 99 %, Viskositat 4,0 Pa • s,
Wirkstoffgehalt 77,6 %.

Beispiel 4

Reaktionskomponenten:

(1) Diolverbindung der Formel Ib, wobei $R^2$ = $(C_4H_6)_{40}$ ist, das ist ein Polybutadiendiol (Äquivalentgewicht = 1 104 g/mol OH)
(2) wie in Beispiel 1
(3) Bernsteinsäureanhydrid
Äquivalentverhaltnis von (1):(2):(3) = 1: 1 : 1,5
Durchführung wie in Beispiel 2.
Umsetzungsgrad 98 %, Viskosität 4,2 Pa • s,
Wirkstoffgehalt 59,2 %.

Beispiel 5

Reaktionskomponenten:

(1) wie in Beispiel 1 (2) wie in Beispiel 3 (3) Dodecenylbernsteinsäureanhydrid
Äquivalentverhältnis von (1):(2):(3) = 1: 0,3 : 0,9
Durchführung wie in Beispiel 1.
Umsetzungsgrad 99 %, Viskosität 3,6 Pa • s, Wirkstoffgehalt 79,5 %.

Beispiel 6

Reaktionskomponenten:

(1) 1,6-Hexandiol: $HO(CH_2)_6OH$
(2) wie in Beispiel 1
(3) Adipinsäure
Äquivalentverhältnis von (1):(2):(3) = 1: 0,4 : 0,9
Durchführung wie in Beispiel 1.
Umsetzungsgrad 98,4 %, Viskosität 1,1 Pa • s, Wirkstoffgehalt 74 %.

Beispiel 7

Reaktionskomponenten:

(1) Neopentylglykol (2) Additionsprodukt (2b) (3) Dicarbonsäure der Formel

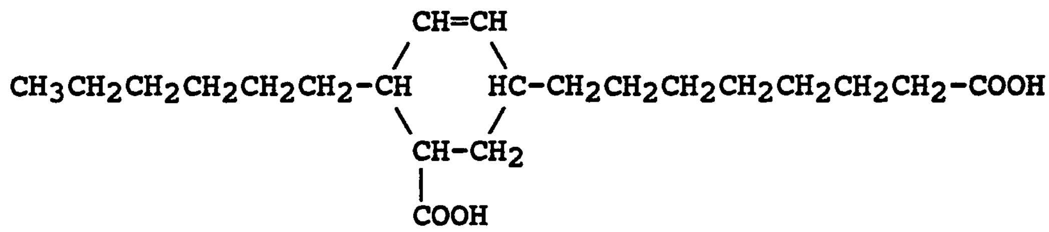

Äquivalentverhaltnis von (1) : (2) : (3) = 1 : 0,9 : 1,4
Durchführung wie in Beispiel 1.
Umsetzungsgrad 99 %, Viskosität 8,3 Pa • s,
Wirkstoffgehalt 82 %.

Beispiel 8

Reaktionskomponenten:

(1) Ethylenoxid/Propylenoxid-Blockpolymeres der Formel Ia mit einem zentralen Propylenoxid-Block ($R^1$ = $CH_3$) aus 29 Propylenoxideinheiten und jeweils einem daran anschließenden Ethylenoxidblock ($R^1$ = H) aus jeweils 4 Ethylenoxideinheiten (Äquivalentgewicht = 940 g/mol OH)
(2) Additionsprodukt (2e)
(3) Maleinsäure
Äquivalentverhaltnis von (1) : (2) : (3) = 1 : 0,5 : 1,2
Durchfuhrung wie in Beispiel 1.
Umsetzungsgrad 98 %, Viskositat 38 Pa • s, Wirkstoffgehalt 84 %.

Die erfindungsgemaßen Erdölspalter der Beispiele 1 bis 8 wurden in Erdölemulsionen getestet. Die Ergebnisse sind in den nachstehenden Tabellen I bis III zusammengefaßt.

TABELLE I

| Ursprung der Rohölemulsion: Kuwait<br>Wassergehalt der Rohölemulsion: 25,6 Vol-%<br>Salzgehalt der Rohölemulsion: 4,32 Gew.-%<br>Demulgiertemperatur: 28 °C<br>Dosiermenge: 38 ppm | | | | | | | |
|---|---|---|---|---|---|---|---|
| Veresterungsprodukt aus Beispiel | Wasserseparation in Vol.-% nach Stunden | | | | | | Restsalzgehalt in Gew.-% in der Ölphase |
| | 1 | 2 | 4 | 6 | 8 | 12 | |
| 1 | 12 | 42 | 70 | 81 | 98 | 100 | 0,16 |
| 2 | 0 | 5 | 20 | 95 | 100 | 100 | 0,12 |
| 3 | 40 | 61 | 75 | 86 | 99 | 100 | 0,21 |
| 4 | 26 | 28 | 30 | 51 | 100 | 100 | 0,23 |
| 5 | 55 | 61 | 65 | 72 | 98 | 100 | 0,11 |
| 6 | 21 | 62 | 98 | 99 | 100 | 100 | 0,06 |
| 7 | 5 | 37 | 61 | 75 | 100 | 100 | 0,18 |
| 8 | 8 | 11 | 39 | 68 | 97 | 100 | 0,33 |
| Blindwert | 0 | 0 | 0 | 0 | 0 | 0 | 3,11 |

TABELLE II

| Ursprung der Rohölemulsion: Emsland<br>Wassergehalt der Rohölemulsion: 62,0 Vol-%<br>Salzgehalt der Rohölemulsion: 9,23 Gew.-%<br>Demulgiertemperatur: 40 °C<br>Dosiermenge: 27 ppm | | | | | | | |
|---|---|---|---|---|---|---|---|
| Veresterungsprodukt aus Beispiel | Wasserseparation in Vol.-% nach Minuten | | | | | | Restsalzgehalt Gew.-% in der Ölphase |
| | 20 | 40 | 60 | 90 | 120 | 180 | |
| 1 | 5 | 73 | 93 | 98 | 100 | 100 | 0,09 |
| 2 | 58 | 82 | 96 | 99 | 100 | 100 | 0,12 |
| 3 | 36 | 39 | 42 | 95 | 99 | 100 | 0,30 |
| 4 | 16 | 23 | 63 | 72 | 98 | 100 | 0,16 |
| 5 | 12 | 51 | 72 | 89 | 99 | 100 | 0,27 |
| 6 | 45 | 62 | 81 | 93 | 97 | 100 | 0,29 |
| 7 | 11 | 18 | 25 | 85 | 100 | 100 | 0,07 |
| 8 | 55 | 68 | 73 | 80 | 99 | 100 | 0,09 |
| Blindwert | 0 | 0 | 0 | 0 | 0 | 3 | 7,82 |

TABELLE III

| Ursprung der Rohölemulsion: Venezuela<br>Wassergehalt der Rohölemulsion: 34,5 Vol-%<br>Demulgiertemperatur: 85 °C<br>Dosiermenge: 42 ppm | | | | | | | |
|---|---|---|---|---|---|---|---|
| Veresterungsprodukt aus Beispiel | Wasserseparation in Vol.-% nach Minuten | | | | | | Restwassergehalt in Vol.-% in der Ölphase |
| | 10 | 20 | 30 | 60 | 90 | 120 | |
| 1 | 35 | 58 | 81 | 97 | 100 | 100 | 0,18 |
| 2 | 55 | 56 | 59 | 82 | 90 | 100 | 0,36 |
| 3 | 82 | 88 | 93 | 98 | 99 | 100 | 0,32 |
| 4 | 68 | 69 | 71 | 74 | 98 | 100 | 0,27 |
| 5 | 32 | 58 | 63 | 86 | 97 | 100 | 0,40 |
| 6 | 66 | 82 | 87 | 92 | 100 | 100 | 0,15 |
| 7 | 48 | 51 | 55 | 84 | 88 | 100 | 0,41 |
| 8 | 28 | 42 | 57 | 75 | 99 | 100 | 0,21 |
| Blindwert | 0 | 0 | 0 | 0 | 0 | 0 | 11,16 |

## Ansprüche

1. Aminfreie veresterte Glycidylether-Additionsprodukte, hergestellt durch Veresterung von

(1) einer Diolverbindung der nachstehenden Formel Ia

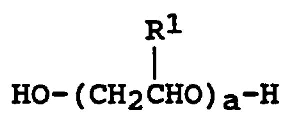

worin a eine Zahl von 1 bis 60 ist und $R^1$ H oder $CH_3$ ist und innerhalb der Kette des Polyoxalkylenrestes, in Blöcken oder statistisch angeordnet, auch beide Bedeutungen annehmen kann, oder der nachstehenden Formel Ib

$HO-R^2-OH$

worin $R^2$ ein acyclischer zweiwertiger Kohlenwasserstoffrest ist, und

(2) einem Additionsprodukt aus 1 mol OH-Funktion eines Polyether-Blockpolymeren der nachstehenden Formel II

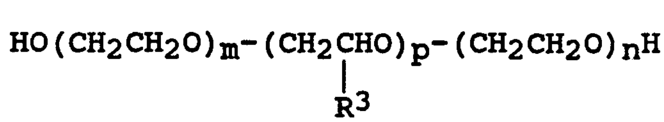

worin $R^3$ Methyl oder Ethyl bedeutet, n und m Zahlen sind, die so gewählt sind, daß der Polyethylenoxidanteil 10 bis 80 % des Molekulargewichts des Gesamtmoleküls beträgt, und p eine Zahl von 10 bis 100 ist,

und 0,3 bis 1 mol Epoxid-Funktion eines Glycidylethers der nachstehenden Formel III

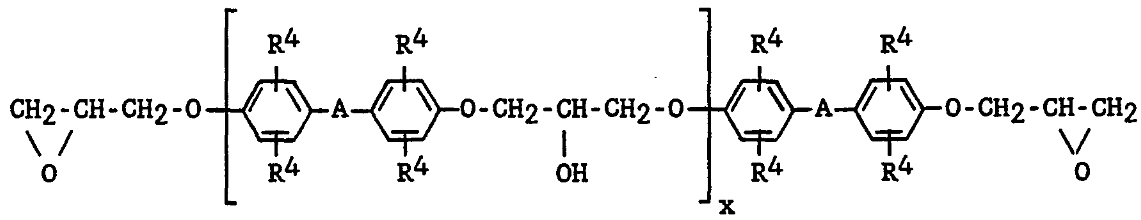

worin $R^4$ gleich oder verschieden sein kann und Wasserstoff, $C_1$ bis $C_4$-Alkyl oder Halogen, A eine direkte Bindung, eine Sulfonyl- oder Cyclohexylgruppe oder eine Gruppe der Formel

$R^5$- C -$R^6$

$R^5$ und $R^6$ = Wasserstoff, Methyl oder Phenyl, und x eine Zahl von 0 bis 10 bedeutet, oder 0,1 bis 1,5 mol Epoxid-Funktion eines Glycidylethers der nachstehenden Formel IV

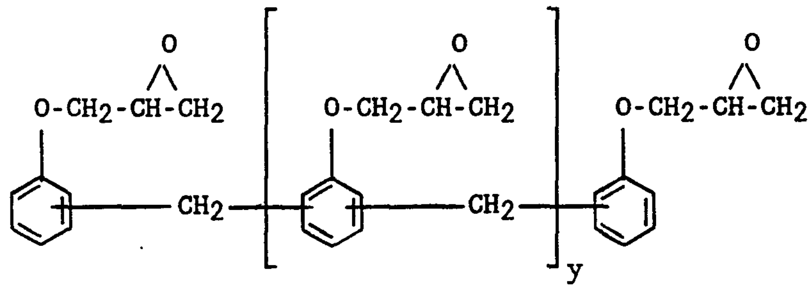

worin y eine Zahl von 1 bis 10 ist, mit

(3) einer Dicarbonsäure, wobei die Reaktionskomponenten (1), (2) und (3) im Äquivalentverhältnis von 1 : (0,1 bis 1,5) : (0,5 bis 2) eingesetzt werden.

2. Glycidylether-Additionsprodukte nach Anspruch 1, dadurch gekennzeichnet, daß die Diolverbindung (1) ein Oxalkylat gemäß Formel Ia ist, worin a eine Zahl von 2 bis 40 ist, oder ein Polybutadiendiol gemäß Formel Ib, worin $R^2$ -$(C_4H_6)_b$- ist mit b = 20 bis 70, und daß das Additionsprodukt (2) gebildet ist aus 1 mol OH-Funktion eines Polyether-Blockpolymeren der Formel II, worin $R^3$ = $CH_3$ ist, m und n Zahlen sind, die so gewählt sind, daß der Polyethylenoxidanteil 15 bis 70 % des Molekulargewichtes des Gesamtmoleküls beträgt, und p eine Zahl von 20 bis 70 ist, und 0,3 bis 1 mol Epoxid-Funktion eines Glycidylethers der Formel III, worin $R^4$ = H ist, A eine Gruppe der Formel

$R^5$- C -$R_6$

ist, worin $R^5$ und $R^6$ H oder $CH_3$ sind, und x eine Zahl von 0 bis 5 ist, oder 0,1 bis 1,5 mol Epoxid-Funktion eines Glycidylethers der Formel IV, worin y eine Zahl von 2 bis 5 ist.

3. Additionsprodukte nach Anspruch 1 oder 2, dadurch gekennzeichnet, daß das Additionsprodukt (2) mit 5 bis 700 g Propylenoxid pro 100 g propoxyliert ist.

4. Additionsprodukte nach einem oder mehreren der Ansprüche 1 bis 3, dadurch gekennzeichnet, daß das Äquivalentverhältnis der Reaktionskomponenten (I), (2) und (3) 1 : (0,3 bis 1) : (0,7 bis 1,5) beträgt.

5. Verwendung der aminfreien veresterten Glycidylether-Additionsprodukte nach den Ansprüchen 1 bis 4 zum Spalten von Erdölemulsionen.